(19) **Europäisches Patentamt / European Patent Office / Office européen des brevets**

(11) **EP 2 373 905 B1**

(12) **FASCICULE DE BREVET EUROPEEN**

(45) Date de publication et mention
de la délivrance du brevet:
**25.06.2014 Bulletin 2014/26**

(21) Numéro de dépôt: **09801516.7**

(22) Date de dépôt: **09.12.2009**

(51) Int Cl.:
***F16F 15/123*** *(2006.01)*    ***F16F 15/134*** *(2006.01)*

(86) Numéro de dépôt international:
**PCT/FR2009/052463**

(87) Numéro de publication internationale:
**WO 2010/079273 (15.07.2010 Gazette 2010/28)**

(54) **DOUBLE VOLANT AMORTISSEUR A DOUBLE MOYENS D'AMORTISSEMENT, NOTAMMENT POUR VEHICULE AUTOMOBILE**

ZWEI DÄMPFUNGSMITTEL AUFWEISENDES SCHWUNGRAD MIT DOPPELTER DÄMPFUNG, INSBESONDERE FÜR EIN KRAFTFAHRZEUG

DOUBLE DAMPING FLYWHEEL WITH DOUBLE DAMPING MEANS, NOTABLY FOR A MOTOR VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.01.2009 FR 0950077**

(43) Date de publication de la demande:
**12.10.2011 Bulletin 2011/41**

(73) Titulaire: **Valeo Embrayages**
**80009 Amiens (FR)**

(72) Inventeurs:
• **FAFET, Olivier**
  **F-80000 Amiens (FR)**
• **FENIOUX, Daniel**
  **F-80480 Saleux (FR)**
• **GRATON, Michel**
  **F-75020 Paris (FR)**
• **RENIER, Lionel**
  **F-80670 Canaples (FR)**

(74) Mandataire: **Jeuland, Mickaël**
**Valeo Embrayages**
**Service Propriété Industrielle**
**Le Delta**
**14, avenue des Béguines**
**92892 Cergy-Pontoise Cedex (FR)**

(56) Documents cités:
**FR-A- 2 647 171      FR-A- 2 776 733**
**JP-A- 63 101 537      US-A- 4 347 717**

## Description

La présente invention concerne un dispositif de couplage d'un moteur avec une boîte de vitesses d'un véhicule automobile, à double volant amortisseur. En particulier, mais non-exclusivement, l'invention concerne un dispositif de couplage destiné à équiper un véhicule automobile à moteur Diesel.

Un double volant amortisseur selon le préambule de la revendication 1 est montré par le document FR 2 776 733 A.

Habituellement, un dispositif de couplage comporte un volant moteur couplé à un vilebrequin d'un moteur du véhicule automobile. Dans le cas d'un dispositif à double volant amortisseur, le volant moteur comporte des organes primaire et secondaire de volant moteur, couplés entre eux par des moyens d'amortissement. Un double volant amortisseur est destiné à filtrer les bruits et les vibrations provenant du moteur.

On connaît déjà dans l'état de la technique, notamment d'après FR-A-2 647 171, un double volant amortisseur pour embrayage, notamment de véhicule automobile, comportant des organes primaire et secondaire de volant moteur, de formes générales de révolution autour d'un axe et sensiblement coaxiaux, mobiles en rotation l'un par rapport à l'autre et couplés grâce à des premiers et seconds moyens d'amortissement agencés en série par l'intermédiaire d'un voile de liaison de forme générale de révolution autour de l'axe des organes primaire et secondaire.

Les premiers moyens d'amortissement comportent quatre organes élastiques courbes répartis circonférentiellement autour de l'axe des organes primaire et secondaire. On rappelle qu'un organe élastique courbe est un organe élastique destiné à se déformer circonférentiellement. Chaque organe élastique courbe s'étend circonférentiellement entre des sièges d'appui portés par le voile de liaison.

Les seconds moyens d'amortissement comportent huit organes élastiques droits répartis circonférentiellement autour de l'axe des organes primaire et secondaire. On rappelle qu'un organe élastique droit est un organe élastique destiné à se déformer axialement. Chaque organe élastique droit s'étend dans une fenêtre du voile de liaison.

Ces premiers et seconds moyens d'amortissement en série permettent de filtrer les bruits et les vibrations à différents régimes du moteur.

Par exemple, lors du démarrage du véhicule automobile, le débattement angulaire autorisé par les seconds moyens d'amortissement à organes élastiques droits est habituellement insuffisant. Ainsi, à bas régime du moteur, notamment lors du démarrage, les bruits et les vibrations provenant du moteur sont principalement filtrés grâce aux premiers moyens d'amortissement à organes élastiques courbes.

Par ailleurs, lorsque le moteur est à haut régime, les organes élastiques courbes des premiers moyens d'amortissement subissent une force centrifuge, qui a pour effet de générer des frottements entre ces organes élastiques courbes et des organes de guidage dans lesquels ils sont logés. Dans ce cas, ces frottements limitent l'efficacité de ces premiers moyens d'amortissement.

Ainsi, à haut régime, les bruits et les vibrations provenant du moteur sont principalement filtrés grâce aux seconds moyens d'amortissement, dont les ressorts droits ne sont pas soumis aux frottements précités.

Toutefois, dans certains cas, notamment à haut régime, la raideur angulaire des seconds moyens d'amortissement est trop élevée pour assurer un filtrage satisfaisant des vibrations.

L'invention a notamment pour but de remédier à cet inconvénient en fournissant un double volant amortisseur dont le filtrage des vibrations est efficace dans toutes les situations de fonctionnement normal.

A cet effet, l'invention a pour objet un double volant amortisseur pour embrayage, notamment de véhicule automobile, comportant des organes primaire et secondaire de volant moteur, sensiblement coaxiaux, mobiles en rotation l'un par rapport à l'autre et couplés grâce à des premiers et seconds moyens d'amortissement agencés en série par l'intermédiaire d'un voile de liaison, tels que :

-    les premiers moyens d'amortissement comportent au moins un organe élastique courbe s'étendant circonférentiellement entre deux premiers sièges d'appui portés par le voile de liaison,

-    les seconds moyens d'amortissement comportent au moins deux groupes d'organes élastiques, comportant chacun au moins deux organes élastiques droits agencés en série par l'intermédiaire d'un élément intermédiaire d'appui, chaque groupe d'organes élastiques droits s'étendant circonférentiellement entre deux seconds sièges d'appui portés par le voile de liaison,

-    au moins un organe annulaire de phasage des organes élastiques droits, distinct du voile de liaison, portant l'élément intermédiaire d'appui de chaque groupe,

caractérisé en ce que la différence entre le débattement angulaire maximum entre l'organe primaire et le voile de liaison, et le débattement angulaire maximum entre l'organe secondaire et le voile de liaison, est inférieure à 30°, de préférence inférieure à 10°.

Cela signifie que les deux débattements précités sont proches l'un de l'autre. Le débattement angulaire maximum entre l'organe primaire et le voile de liaison peut être plus grand ou plus petit que le débattement angulaire maximum entre l'organe secondaire et le voile de liaison.

Contrairement aux organes élastiques droits de l'état de la technique, agencés parallèlement les uns aux autres, les groupes d'organes élastiques droits agencés en série autorisent un grand débattement angulaire des seconds moyens d'amortissement, sans comporter les inconvénients que possèdent des moyens d'amortissement à organes élastiques courbes. Notamment, les seconds moyens d'amortissement ne sont pas soumis à des frottements gênants dus à la force centrifuge à haut régime.

Du fait de ce grand débattement angulaire autorisé, les efforts élastiques générés par ces seconds moyens d'amortissement sont inférieurs à ceux générés par les moyens d'amortissement à ressorts droits de l'état de la technique.

Par ailleurs, grâce à l'organe annulaire de phasage, portant les éléments intermédiaires contre lesquels les organes élastiques droits sont en appui, chaque groupe d'organes élastiques se déforme en phase. Ainsi, les efforts élastiques générés par les groupes d'organes élastiques sont donc répartis circonférentiellement et de manière homogène autour de l'axe, de sorte que la composante radiale de ces efforts est sensiblement nulle.

Du fait de cette composante radiale sensiblement nulle, les frottements des organes élastiques droits sur leurs sièges sont limités, ce qui optimise l'efficacité de ces organes élastiques droits.

De tels seconds moyens d'amortissement permettent donc un filtrage efficace des vibrations, même à haut régime du moteur, lorsque l'efficacité des organes élastiques courbes des premiers moyens d'amortissement est limitée à cause de la force centrifuge.

En outre, le contrôle des débattements angulaires précités a pour effet d'augmenter la performance des seconds moyens d'amortissement en améliorant la filtration des bruits et des vibrations du moteur dans tous les modes de fonctionnement.

Un double volant amortisseur selon l'invention peut en outre comporter l'une ou plusieurs des caractéristiques suivantes.

-  Les premiers et seconds moyens d'amortissement ont des raideurs statiques sensiblement égales, c'est-à-dire que leur différence relative est inférieure à 30 % environ.
-  Les seconds moyens d'amortissement comportent trois groupes d'organes élastiques, chaque groupe comprenant deux organes élastiques droits s'étendant chacun entre un second siège d'appui respectif et l'élément intermédiaire d'appui de ce groupe.
-  L'organe de phasage est une rondelle, de forme générale de révolution autour de l'axe des organes primaire et secondaire, chaque élément intermédiaire d'appui étant formé par une patte radialement externe agencée sur cette rondelle.
-  Chaque organe élastique courbe des premiers moyens d'amortissement est agencé radialement à l'extérieur par rapport à chaque organe élastique droit des seconds moyens d'amortissement. En effet, l'organe annulaire de phasage est de préférence agencé radialement à l'intérieur du double volant amortisseur afin de limiter son inertie.

-  Le double volant amortisseur comporte des moyens d'étanchéité externes comprenant des première et deuxième rondelles d'étanchéité, la première rondelle d'étanchéité étant agencée entre la deuxième rondelle de guidage des premiers moyens d'amortissement et la quatrième rondelle de guidage des seconds moyens d'amortissement, et la deuxième rondelle d'étanchéité étant agencée entre la première rondelle de guidage des premiers moyens d'amortissement et la troisième rondelle de guidage des seconds moyens d'amortissement.
-  Le double volant amortisseur comprend des moyens d'étanchéité internes comprenant des troisième et quatrième rondelles d'étanchéité, la troisième rondelle d'étanchéité étant agencée entre la quatrième rondelle de guidage et l'organe de phasage des seconds moyens d'amortissement, et la quatrième rondelle d'étanchéité étant agencée entre la troisième rondelle de guidage des second moyen d'amortissement et le voile.
-  Le double volant amortisseur comporte des moyens de limitation des couples auxquels sont soumis les premiers et seconds moyens d'amortissement, comportant une rondelle d'appui solidaire en rotation avec le moyeu de limitation, et une rondelle élastique de type Belleville intercalée entre la rondelle d'appui et le volant secondaire, destinée à appliquer une charge sur le volant secondaire.
-  Des rondelles anti-usure sont intercalées entre la rondelle élastique et le volant secondaire, et entre le volant secondaire et la rondelle de guidage.
-  Le voile de liaison comporte au moins une patte radiale portant à la fois au moins l'un des premiers sièges, destiné à coopérer avec l'organe élastique courbe des premiers moyens d'amortissement, et au moins l'un des seconds sièges, destiné à coopérer avec l'un des organes élastiques droits des seconds moyens d'amortissement.
-  L'organe de phasage est réalisé en un matériau de masse volumique inférieure à 5000 kg/m3, de préférence choisi parmi l'aluminium, le titane ou un composite à base de fibres de verre, de carbone ou de kevlar. On limite ainsi l'inertie de cet organe de phasage.
-  Les seconds moyens d'amortissement comprennent deux rondelles de guidage comportant chacune au moins un renfoncement axial formant un logement pour un groupe d'organes élastiques droits.

L'invention sera mieux comprise à la lecture de la description qui va suivre, donnée uniquement à titre d'exemple et faite en se référant aux dessins annexés dans lesquels :

-  la figure 1 est une vue en perspective éclatée d'un double volant amortisseur selon un exemple de mode de réalisation de l'invention ;

- la figure 2 est une demi-vue en coupe axiale du double volant amortisseur de la figure 1 ;
- la figure 3 est une vue de face du double volant amortisseur de la figure 1 ;
- la figure 4 est une représentation schématique illustrant le principe de fonctionnement du double volant amortisseur ;
- la figure 5 est une vue de face d'une partie d'un double volant amortisseur selon une variante de réalisation de l'invention.

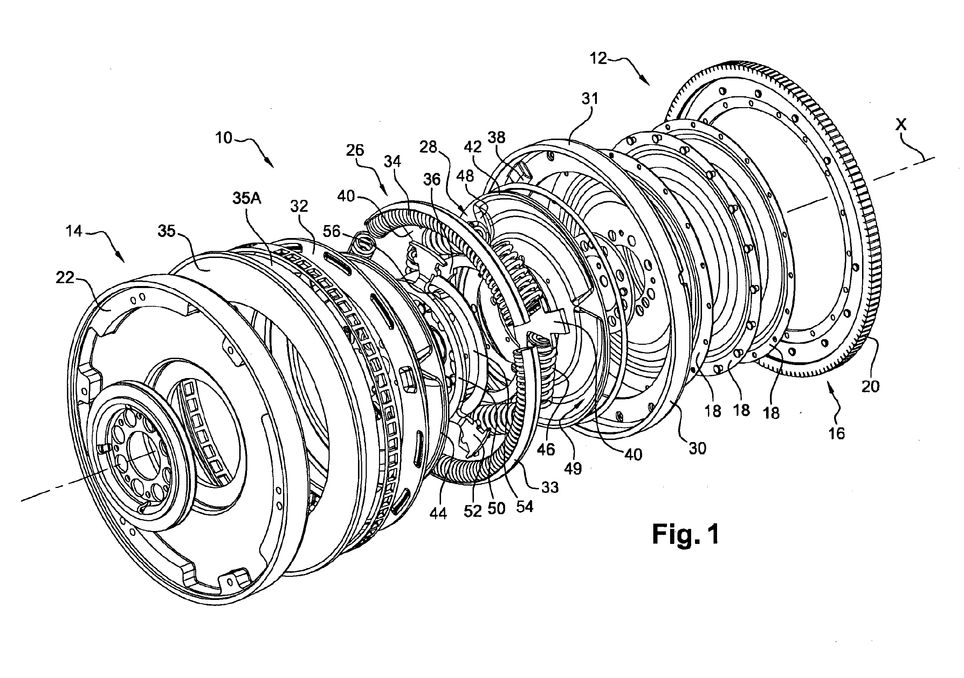

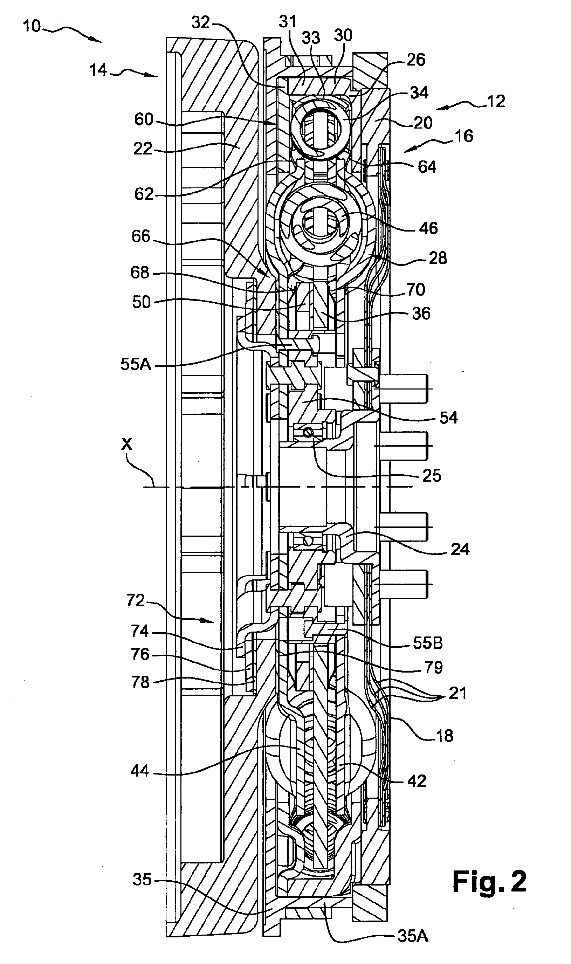

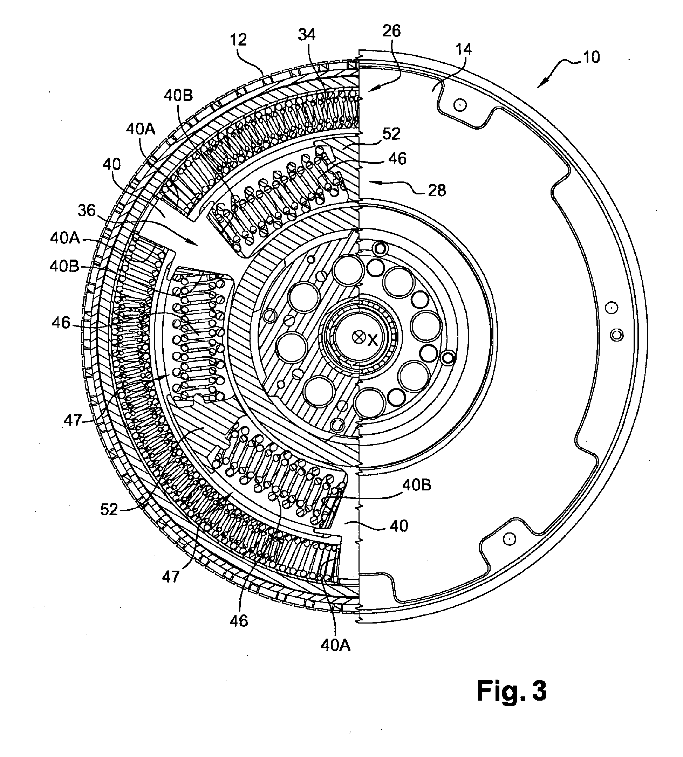

On a représenté sur les figures 1 à 3 un double volant amortisseur 10 selon un exemple de mode de réalisation de l'invention, destiné à équiper un embrayage de véhicule automobile. De manière classique, un tel embrayage est destiné à coupler un moteur, par exemple un moteur de type Diesel, avec une boîte de vitesses du véhicule automobile.

Le double volant amortisseur 10 est destiné à être solidarisé en rotation avec un vilebrequin du moteur, à l'aide de moyens classiques de solidarisation, par exemple à vis.

Le double volant amortisseur 10 comporte un organe primaire 12 et un organe secondaire 14 de volant moteur, de formes générales de révolution et sensiblement coaxiaux, d'axe commun X.

L'organe primaire 12 comporte un volant primaire 16 flexible, comprenant au moins deux, de préférence trois, disques en tôle 18 empilés, et un premier organe d'inertie 20, de préférence en fonte ou en acier, de forme générale de révolution, entourant les disques 18 en tôle. De préférence, afin de limiter leur encombrement axial, les disques 18 en tôle sont cambrés axialement de façon à former des cambrages 21. Ces cambrages 21 sont décalés axialement et radialement les uns par rapport aux autres, de façon à ne pas entraver la flexibilité du volant primaire.

Le volant primaire 16 est destiné à porter les moyens de solidarisation avec le vilebrequin.

L'organe secondaire 14 comporte un volant secondaire 22, de préférence en fonte, destiné à porter un plateau de réaction d'un mécanisme de l'embrayage. De manière classique, ce plateau de réaction est destiné à former un appui d'un disque de friction, lié en rotation avec un arbre de la boîte de vitesses et sollicité par un plateau de pression solidaire en rotation du volant secondaire 22, lorsque l'embrayage est en position embrayée.

L'organe secondaire 14 est monté rotatif sur un moyeu 24 de l'organe primaire 12, rapporté sur le volant flexible 16. A cet effet, un roulement à billes 25 de centrage est agencé entre le moyeu 24 et l'organe secondaire 14. En variante, ce roulement à billes 25 pourrait être remplacé par deux roulements à billes ou par un palier de centrage.

Les organes primaire 12 et secondaire 14 de volant moteur sont couplés grâce à des premiers 26 et seconds 28 moyens d'amortissement à effet circonférentiel, couplés en série, destinés à réduire les vibrations provenant du moteur du véhicule automobile.

Les premiers moyens d'amortissement 26 comportent des première 30 et seconde 32 rondelles de guidage, solidarisées en rotation avec l'organe primaire 12 à l'aide de moyens de solidarisation classiques, par exemple à l'aide de rivets.

Les premiers moyens d'amortissement 26 comportent également des organes élastiques courbes 34, de préférence trois organes élastiques courbes 34 répartis circonférentiellement autour de l'axe X. Ces organes élastiques courbes 34 sont destinés à coupler élastiquement les première 30 et seconde 32 rondelles de guidage avec un voile de liaison 36 de forme générale de révolution autour de l'axe X.

A cet effet, les première 30 et seconde 32 rondelles de guidage comportent des saillies 38 formant des sièges d'appui pour les organes élastiques courbes 34, et le voile de liaison 36 comporte des pattes 40, de préférence trois pattes 40, portant chacune des premiers sièges d'appui 40A. Ainsi, chaque organe élastique courbe 34 s'étend circonférentiellement entre deux premiers sièges d'appui 40A, portés respectivement par deux pattes 40 circonférentiellement consécutives du voile de liaison 36.

On notera que la première rondelle de guidage 30 comporte, à sa périphérie radialement externe, une collerette 31 s'étendant axialement jusqu'à la seconde rondelle de guidage 32, de façon à former, avec cette seconde rondelle de guidage 32, un logement pour les organes élastiques courbes 34. Cette collerette 31 est susceptible de retenir un lubrifiant visqueux, tel que de la graisse ou de l'huile, autour des organes élastiques courbes 34, empêchant notamment ce lubrifiant de s'échapper sous l'effet d'une force centrifuge. Par ailleurs, cette collerette 31 est également susceptible de retenir les organes élastiques courbes 34 lorsqu'ils sont soumis à la force centrifuge, à haut régime du moteur.

Des organes de guidage 33, en forme de goulottes, dans lesquels coulissent les organes élastiques courbes 34 sont intercalés entre la collerette 31 et chacun de ces organes élastiques 34.

Le double volant amortisseur 10 comporte en outre un second organe annulaire d'inertie 35 comportant, à sa périphérie radialement externe, une collerette d'inertie 35A s'étendant axialement de façon à entourer les première 30 et seconde 32 rondelles de guidage. Ce second organe annulaire d'inertie 35, associé au premier organe d'inertie 20, est destiné à optimiser l'inertie du volant primaire 16.

Les seconds moyens d'amortissement 28 comportent des troisième 42 et quatrième 44 rondelles de guidage, solidarisées en rotation avec l'organe secondaire 14 à l'aide de moyens de solidarisation classiques, par exemple à l'aide de vis ou de rivets. Les seconds moyens d'amortissement 28 comportent également des organes élastiques droits 46, de préférence trois groupes 47 comportant chacun deux organes élastiques droits 46. Ces trois groupes 47 sont répartis circonférentiellement autour de l'axe X.

Chaque groupe 47 de deux organes élastiques droits 46 en série s'étend circonférentiellement entre deux seconds sièges d'appui 40B, portés respectivement par deux pattes 40 circonférentiellement consécutives du voile de liaison 36.

Ainsi, chaque patte 40 porte à la fois un premier siège d'appui 40A pour un organe élastique courbe 34 des premiers moyens d'amortissement 26 et un second siège d'appui 40B pour un organe élastique droit 46 des seconds moyens d'amortissement 28. En d'autres termes, les organes élastiques courbes 34 et les organes élastiques droits 46 sont sensiblement dans le même alignement radial.

Les organes élastiques droits 46 sont destinés à coupler élastiquement le voile de liaison 36 avec les troisième 42 et quatrième 44 rondelles de guidage. A cet effet, les troisième 42 et quatrième 44 rondelles de guidage comportent des portées d'appui 48 formant sièges d'appui pour les organes élastiques droits 46.

Chaque rondelle de guidage 42, 44 comporte des renfoncements axiaux 49 dont les bords forment les portées d'appui 48, chaque renfoncement 49 étant destiné à loger un groupe de deux organes élastiques droits 46. Ces renfoncements 49 sont de préférence remplis de lubrifiant visqueux, tel que de la graisse ou de l'huile, afin de limiter les frottements des organes élastiques droits 46.

On notera que l'inertie du voile de liaison 36, dont les sièges d'appui sont portés par les pattes 40, est inférieure à l'inertie d'un voile de liaison classique dont les sièges d'appui sont formés par des bords de fenêtres de logement d'organes élastiques. En effet, de telles fenêtres comportent un bord radialement externe qui forme une masse augmentant l'inertie du voile.

Afin que les organes élastiques droits 46 de chaque groupe soient agencés en série sans frottement, les seconds moyens d'amortissement 28 comportent un organe annulaire 50 de phasage des organes élastiques droits 46, distinct du voile de liaison 36.

L'organe annulaire de phasage 50 est formé par une rondelle comprenant des pattes radialement externes 52, chaque patte 52 formant un élément intermédiaire d'appui destiné à être intercalé entre les deux organes élastiques droits 46 consécutifs d'un même groupe d'organes élastiques, de sorte que ces deux organes élastiques droits 46 consécutifs sont agencés en série.

Puisque les éléments intermédiaires d'appui 52 sont portés par le même organe annulaire de phasage 50, les groupes 47 d'organes élastiques droits 46 se déforment en phase les uns avec les autres. Les efforts élastiques générés par les seconds moyens d'amortissement 28 sont donc répartis circonférentiellement et de manière homogène.

De préférence, l'organe de phasage 50 est conformé de façon à avoir une inertie faible, afin de limiter les phénomènes de résonance amplifiant les vibrations.

En effet, la masse radialement externe de l'organe de phasage est limitée, puisque les éléments intermédiaires d'appui 52 sont formés par des pattes, et non par des bords de fenêtres de logement des organes élastiques. Par ailleurs, l'organe de phasage 50 est de préférence réalisé en un matériau de masse volumique inférieure à 5000 kg/m3, de préférence choisi parmi l'aluminium, le titane ou un composite à base de fibres de verre, de carbone ou de kevlar, comprenant de manière optionnelle des inserts de renforcement. De manière optionnelle, l'organe de phasage 50 pourrait comporter des inserts de renfort, notamment dans le cas où sa masse volumique est réduite.

En outre, les dimensions de l'organe de phasage 50 sont de préférence limitées afin de limiter son inertie. En effet, chaque organe élastique courbe des premiers moyens d'amortissement est agencé radialement à l'extérieur par rapport à chaque organe élastique droit des seconds moyens d'amortissement. Ainsi, l'organe annulaire de phasage 50 est agencé radialement à l'intérieur du double volant amortisseur 10, ce qui limite sa masse radialement externe et son inertie.

En variante, chaque organe élastique droit 46 des seconds moyens d'amortissement 28 pourrait à l'inverse être agencé radialement à l'extérieur par rapport à chaque organe élastique courbe 34 des premiers moyens d'amortissement 26. Toutefois, dans ce cas, l'organe annulaire de phasage 50 s'étendrait davantage radialement vers l'extérieur, ce qui augmenterait son inertie.

On notera que les seconds moyens d'amortissement 28 autorisent de grands débattements angulaires entre les troisième 42 et quatrième 44 rondelles de guidage et le voile de liaison 36. De préférence, les seconds moyens d'amortissement ont une raideur angulaire d'environ 15 Nm/° pour un débattement angulaire maximum d'environ 40°.

Afin de limiter ce débattement angulaire, et limiter la déformation des organes élastiques droits 46, le double volant amortisseur 10 comporte un moyeu de limitation 54, solidarisé en rotation avec les troisième 42 et quatrième 44 rondelles de guidage, et comportant une denture externe 56 destinée à coopérer avec jeu avec une denture interne 58 du voile de liaison 36. Ainsi, les dentures externe 56 et interne 58 forment des butées complémentaires de limitation du débattement angulaire entre les troisième 42 et quatrième 44 rondelles de guidage et le voile de liaison 36.

De préférence, le moyeu de limitation 54 est solidarisé avec la troisième 42 et la quatrième 44 rondelle de guidage à l'aide de moyens de solidarisation distincts 55A, 55B, ce qui permet de faciliter le montage de ces rondelles de guidage 42, 44 sur le moyeu de limitation 54.

On notera que la différence du débattement angulaire maximum entre l'organe primaire 12 et le voile de liaison 36 avec le débattement angulaire maximum entre l'organe secondaire 14 et le voile de liaison 36 est inférieure à 30°, de préférence inférieure à 10°.

Par ailleurs, on notera que la courbe caractéristique charge/débattement angulaire des premiers 26 et seconds 28 moyens d'amortissement peut être une courbe mono-pente, ou multi-pente, par exemple bi-pente. On obtient une courbe multi-pente à l'aide d'organes élastiques comprenant des ressorts hélicoïdaux extérieurs et intérieurs concentriques, tels que les ressorts intérieurs sont plus courts que les ressorts extérieurs. Ainsi, ces ressorts intérieurs et extérieurs sont comprimés de façon différée.

Le double volant amortisseur 10 comprend des moyens d'étanchéité externes 60, destinés à fermer un logement entourant les premiers 26 et seconds 28 moyens d'amortissement, afin d'y maintenir le lubrifiant visqueux.

Les moyens d'étanchéité externes 60 comprennent des première 62 et deuxième 64 rondelles d'étanchéité, agencées chacune entre la troisième 42 ou la quatrième 44 rondelle de guidage des seconds moyens d'amortissement 28 et un autre élément délimitant le logement.

Par exemple, conformément au mode de réalisation décrit, la première rondelle d'étanchéité 62 est agencée entre la deuxième rondelle de guidage 32 des premiers moyens d'amortissement 26 et la quatrième rondelle de guidage 44 des seconds moyens d'amortissement 28. Par ailleurs, la deuxième rondelle d'étanchéité 64 est agencée entre la première rondelle de guidage 30 des premiers moyens d'amortissement 26 et la troisième rondelle de guidage 42 des seconds moyens d'amortissement 28.

En variante, la première rondelle d'étanchéité pourrait être agencée entre la quatrième rondelle de guidage 44 des seconds moyens d'amortissement 28 et le second organe annulaire d'inertie 35, et la seconde rondelle d'étanchéité pourrait être agencée entre la troisième rondelle de guidage 42 des seconds moyens d'amortissement 28 et le volant primaire 16, ou un élément rapporté sur ce volant primaire 16.

Le double volant amortisseur comprend également des moyens d'étanchéité internes 66 comprenant des troisième 68 et quatrième 70 rondelles d'étanchéité.

La troisième rondelle d'étanchéité 68 est agencée entre la quatrième rondelle de guidage 44 et l'organe de phasage 50 des seconds moyens d'amortissement 28. Cette troisième rondelle d'étanchéité 68 n'est soumise à un frottement que le long du débattement relatif entre la quatrième rondelle de guidage 44 et l'organe de phasage 50, c'est-à-dire le long de la moitié du débattement angulaire maximum entre l'organe secondaire 14 et le voile de liaison 36, qui est le débattement des premiers moyens d'amortissement 26.

La quatrième rondelle d'étanchéité 70 est agencée entre la troisième rondelle de guidage 42 des seconds moyens d'amortissement 28 et le voile 36. Cette quatrième rondelle d'étanchéité 70 est soumise à un frottement le long du débattement relatif entre la troisième rondelle de guidage 42 et le voile 36, c'est-à-dire le long du débattement des seconds moyens d'amortissement 28.

De préférence, le double volant amortisseur 10 comporte des moyens 72 de limitation des couples auxquels sont soumis les premiers et seconds moyens d'amortissement.

Les moyens de limitation de couple 72 comportent une rondelle d'appui 74 solidaire en rotation avec le moyeu de limitation 54, et une rondelle élastique 76 de type Belleville intercalée entre la rondelle d'appui 74 et le volant secondaire 22. La rondelle élastique 76 est destinée à appliquer une charge sur le volant secondaire 22, de sorte que ce volant secondaire 22 est pincé entre la rondelle élastique 76 et la quatrième rondelle de guidage 44.

La rondelle élastique 76 est destinée à appliquer une charge telle que, lorsque le couple est inférieur à un seuil prédéterminé, le volant secondaire 22 est lié en rotation avec la quatrième rondelle de guidage 44 et, lorsque ce couple est supérieur au seuil prédéterminé, le volant secondaire 22 glisse circonférentiellement par rapport à la quatrième rondelle de guidage 44.

De préférence, des rondelles anti-usure 78, 79 sont intercalées respectivement entre la rondelle élastique 76 et le volant secondaire 22, et entre le volant secondaire 22 et la rondelle de guidage 44.

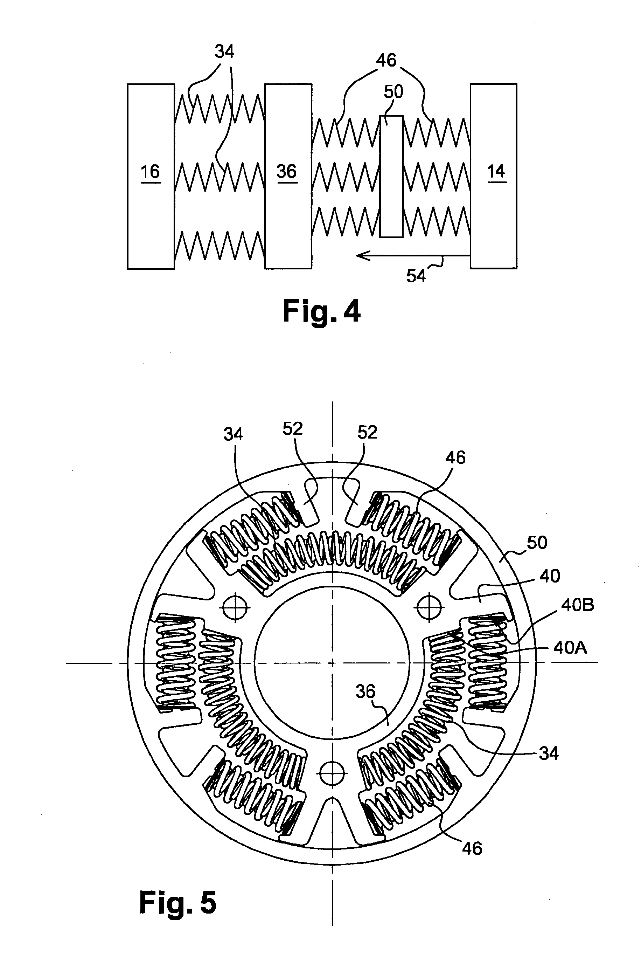

En fonctionnement, le couple est transmis par le vilebrequin à l'organe primaire 12 qui comprime les ressorts courbes 34 (voir figure 4). Ces derniers, en appui sur les pattes 40, entraînent le voile 36 et compriment un premier étage de ressorts droits 46, puis, par l'intermédiaire de l'organe annulaire de phasage 50, compriment un second étage de ressorts droits 46. Ce second étage entraîne à son tour l'organe secondaire 14, par l'intermédiaire des moyens de limitation du couple 72.

Le débattement entre l'organe secondaire 14 et le voile 36 est limité par la butée 54 représentée schématiquement à la figure 4.

En fonctionnement, comme indiqué précédemment, la force centrifuge provoque le frottement des spires des ressorts courbes 34 sur la collerette 31 de la rondelle de guidage 30, ce qui tend à accroître la raideur des ressorts courbes 34. En effet, quand la vitesse de l'organe primaire 12 augmente, une grande partie des spires des ressorts courbes 34 est bloquée par le frottement. La raideur d'un ressort étant fonction du nombre de spires actives, la raideur des premiers moyens d'amortissement 26 augmente proportionnellement avec le nombre de spires bloquées ou inactives sous l'effet de la force centrifuge.

A l'extrême limite, si toutes les spires des ressorts courbes 34 sont bloquées, la raideur globale du double volant amortisseur 10 est celle des seconds moyens d'amortissement 28, comportant les ressorts droits 46.

Les ressorts courbes 34 ont un débattement plus faible que dans l'art antérieur. Ils sont également plus légers, ce qui a pour effet de limiter le coincement des spires dû à l'action de la force centrifuge. L'efficacité des ressorts courbes 34 est ainsi accrue.

Les seconds moyens d'amortissement 28 sont moins sensibles à la force centrifuge, du fait notamment de l'utilisation de l'organe de phasage 50. La raideur des seconds moyens d'amortissement 28 est ainsi pratiquement constante dans tous les modes de fonctionnement.

La raideur globale K du double volant amortisseur 10 peut être calculée à partir de la raideur K1 des premiers moyens d'amortissement 26 (ressorts courbes 34) et de la raideur K2 des seconds moyens d'amortissement (ressorts droits 46), selon la formule suivante :

$$1/K = 1/K1 + 1/K2.$$

En fonctionnement dynamique, c'est-à-dire lorsque la force centrifuge est importante, la raideur K1 augmente du fait du blocage partiel des ressorts courbes. La raideur K est alors proche de la raideur K2.

A titre d'exemple, le couple transmis par le vilebrequin à l'organe primaire est de l'ordre de 600 N.m.

Dans un double volant amortisseur de l'art antérieur, les premiers moyens d'amortissement (ressorts courbes) ont un débattement de l'ordre de 65°, une raideur de l'ordre de 9 N.m/° en fonctionnement statique, c'est-à-dire lorsque les spires des ressorts courbes ne sont pas bloquées sous l'effet de la force centrifuge, et une raideur de l'ordre de 37 N.m/° en fonctionnement dynamique, lorsque seules 25 % des spires des ressorts courbes sont encore actives, les autres étant bloquées sous l'effet de la force centrifuge.

En outre, les seconds moyens d'amortissement ont un débattement de l'ordre de 15° et une raideur de l'ordre de 40 N.m/°, aussi bien en fonctionnement statique qu'en fonctionnement dynamique.

La raideur résultante K du double volant amortisseur de l'art antérieur est ainsi de 7,5 N.m/° en fonctionnement statique et de 19 N.m/° en fonctionnement dynamique.

Dans un double volant amortisseur selon l'invention, les premiers moyens d'amortissement 26 (ressorts courbes 34) ont un débattement de l'ordre de 40°, une raideur de l'ordre de 15 N.m/° en fonctionnement statique, et une raideur de l'ordre de 60 N.m/° en fonctionnement dynamique, lorsque seules 25 % des spires des ressorts courbes 34 sont encore actives, les autres étant bloquées sous l'effet de la force centrifuge.

En outre, les seconds moyens d'amortissement 28 (ressorts droits 46) ont un débattement de l'ordre de 40° et une raideur de l'ordre de 15 N.m/°, aussi bien en fonctionnement statique qu'en fonctionnement dynamique.

La raideur résultante K du double volant amortisseur de l'art antérieur est ainsi de 7,5 N.m/° en fonctionnement statique et de 12 N.m/° en fonctionnement dynamique.

Ceci présente une amélioration de plus de 30% par rapport à l'art antérieur. Dans le cas extrême où toutes les spires des ressorts courbes seraient bloquées, l'amélioration serait encore plus importante : 15 N .m/° au lieu de 40 N.m/°.

On remarquera également que, dans le cas de l'art antérieur, la différence entre le débattement angulaire maximum entre l'organe primaire et le voile de liaison (débattement des premiers moyens d'amortissement), et le débattement angulaire maximum entre l'organe secondaire et le voile de liaison (débattement des seconds moyens d'amortissement), est égale à 50° (65° - 15°).

Dans le cas de l'invention, cette différence est nulle dans l'exemple précité (40° - 40°). Ceci permet d'augmenter les performances des seconds moyens d'amortissement 28 en améliorant la filtration des bruits et des vibrations du moteur dans tous les modes de fonctionnement.

On notera enfin que l'invention n'est pas limitée au mode de réalisation précédemment décrit.

En effet, en variante, l'organe de phasage pourrait être formé par une rondelle annulaire entourant les organes élastiques droits, comportant des pattes radialement internes formant les éléments intermédiaires d'appui.

Conformément à une autre variante non représentée, chaque organe élastique droit 46 pourrait comporter, à au moins une de ses extrémités, une coupelle d'appui. Une telle coupelle d'appui serait donc intercalée entre l'organe élastique droit 46 et son siège, empêchant un contact direct entre cet organe élastique droit 46 et son siège, donc limitant donc l'usure de ce dernier.

De même, chaque organe élastique courbe 34 pourrait également comporter, à au moins une de ses extrémités, une coupelle d'appui intercalée entre cet organe élastique courbe 34 et son siège, empêchant un contact direct entre cet organe élastique courbe 34 et ce siège, donc limitant donc l'usure de ce dernier.

Conformément à une autre variante de réalisation, le double volant amortisseur pourrait comporter au moins un patin de glissement intercalé entre chaque organe élastique courbe 34 et la première rondelle de guidage 30, afin de limiter le frottement généré entre cet organe élastique courbe 34 et cette première rondelle de guidage 30.

Conformément à une autre variante de réalisation, chaque groupe d'organes élastiques droit pourrait comporter plus de deux organes élastiques droits. Dans ce cas, le double volant amortisseur comporterait davantage d'organes de phasage, chaque organe de phasage portant, pour chaque groupe, un élément intermédiaire d'appui intercalé entre deux organes élastiques consécutif.

Par exemple chaque groupe d'organes élastiques droits peut comporter trois organes élastiques droits. Dans ce cas, le double volant amortisseur comporte deux organes de phasage. De préférence, un double volant amortisseur conforme à cette variante de réalisation comporte deux organes élastiques courbes.

La figure 5 illustre une variante de réalisation de l'invention dans laquelle les ressorts courbes 34 sont disposés radialement à l'intérieur par rapport aux ressorts droits 46.

Le voile de liaison 36 comporte des pattes radiales 40 formant des premiers sièges d'appui 40A, radialement internes, pour les ressorts courbes 34 et des seconds sièges d'appui 40B, radialement externes, pour les ressorts droits 46.

L'organe annulaire de phasage 50 est formé par une rondelle 50 s'étendant autour des ressorts droits 48 et comportant des pattes 52 s'étendant radialement vers l'intérieur, chaque patte formant un siège d'appui pour un ressort droit 46.

**Revendications**

1. Double volant amortisseur (10) pour embrayage, notamment de véhicule automobile, comportant des organes primaire (12) et secondaire (14) de volant moteur, sensiblement coaxiaux, mobiles en rotation l'un par rapport à l'autre et couplés grâce à des premiers (26) et seconds (28) moyens d'amortissement agencés en série par l'intermédiaire d'un voile de liaison (36), tels que :

   - les seconds moyens d'amortissement (28) comportent au moins deux groupes (47) d'organes élastiques, comportant chacun au moins deux organes élastiques droits (46) agencés en série par l'intermédiaire d'un élément intermédiaire d'appui (52), chaque groupe (47) d'organes élastiques droits s'étendant circonférentiellement entre deux seconds sièges d'appui (40B) portés par le voile de liaison (36),
   au moins un organe annulaire (50) de phasage des organes élastiques droits (46), distinct du voile de liaison (36), portant l'élément intermédiaire d'appui (52) de chaque groupe,

   **caractérisé en ce que**
   les premiers moyens d'amortissement (26) comportent au moins un organe élastique courbe destiné à se déformer circonférentiellement (34) s'étendant circonférentiellement entre deux premiers sièges d'appui (40A) portés par le voile de liaison (36) et **en ce que** la différence entre le débattement angulaire maximum entre l'organe primaire (12) et le voile de liaison (36), et le débattement angulaire maximum entre l'organe secondaire (14) et le voile de liaison (36), est inférieure à 30°, de préférence inférieure à 10°.

2. Double volant amortisseur selon la revendication 1, dans lequel les raideurs angulaires statiques des premiers et second moyens d'amortissement (26, 28) sont sensiblement identiques.

3. Double volant amortisseur (10) selon la revendication 1 ou 2, dans lequel le débattement angulaire maximum entre l'organe secondaire (14) et le voile de liaison (36) est plus grand que le débattement angulaire maximum entre l'organe primaire (12) et le voile de liaison (36).

4. Double volant amortisseur (10) selon l'une quelconque des revendications précédentes, dans lequel les seconds moyens d'amortissement (28) comportent trois groupes (47) d'organes élastiques (46), chaque groupe (47) comprenant deux organes élastiques droits (46) s'étendant chacun entre un second siège d'appui (40B) respectif et l'élément intermédiaire d'appui (52) de ce groupe (47).

5. Double volant amortisseur (10) selon l'une quelconque des revendications précédentes, dans lequel l'organe de phasage (50) est une rondelle, de forme générale de révolution autour de l'axe (X) des organes primaire (12) et secondaire (14), chaque élément intermédiaire d'appui (52) étant formé par une patte radialement externe agencée sur cette rondelle (50).

6. Double volant amortisseur (10) selon l'une quelconque des revendications précédentes, dans lequel chaque organe élastique courbe (34) des premiers moyens d'amortissement (26) est agencé radialement à l'extérieur par rapport à chaque organe élastique droit (46) des seconds moyens d'amortissement (28).

7. Double volant amortisseur (10) selon l'une des revendications 1 à 5, dans lequel chaque organe élastique courbe (34) des premiers moyens d'amortissement (26) est agencé radialement à l'intérieur par rapport à chaque organe élastique droit (46) des seconds moyens d'amortissement (28).

8. Double volant amortisseur (10) selon l'une quelconque des revendications précédentes, comportant des moyens (66) d'étanchéité internes comprenant des troisième (68) et quatrième (70) rondelles d'étanchéité, la troisième rondelle d'étanchéité (68) étant agencée entre la quatrième rondelle de guidage (44) et l'organe de phasage (50) des seconds moyens d'amortissement (28), et la quatrième rondelle d'étanchéité (70) étant agencée entre la troisième rondelle de guidage (42) des seconds moyens d'amortissement (28) et le voile (36).

9. Double volant amortisseur (10) selon l'une quelconque des revendications précédentes, comprenant des moyens (60) d'étanchéité externes comportant des première (62) et deuxième (64) rondelles d'étanchéité, la première rondelle d'étanchéité (62) étant agencée entre la deuxième rondelle de guidage (32) des premiers moyens d'amortissement (26) et la quatrième rondelle de guidage (44) des seconds moyens d'amortissement (28), et la deuxième rondelle d'étanchéité (64) étant agencée entre la première rondelle de guidage (30) des premiers moyens d'amortissement (26) et la troisième rondelle de guidage (42) des seconds moyens d'amortissement (28).

10. Double volant amortisseur (10) selon l'une quelconque des revendications précédentes, dans lequel le voile de liaison (36) comporte au moins une patte radiale (40) portant à la fois :

   - au moins l'un des premiers sièges (40A), destiné à coopérer avec l'organe élastique courbe (34) des premiers moyens d'amortissement (26), et
   - au moins l'un des seconds sièges (40B), destiné à coopérer avec l'un des organes élastiques droits (46) des seconds moyens d'amortissement (28).

11. Double volant amortisseur (10) selon l'une quelconque des revendications précédentes, dans lequel l'organe de phasage (50) est réalisé en un matériau de masse volumique inférieure à 5000 kg/m3, de préférence un matériau choisi parmi l'aluminium, le titane ou un composite à base de fibres de verre, de carbone ou de kevlar.

12. Double volant amortisseur (10) selon l'une quelconque des revendications précédentes, dans lequel l'organe de phasage (50) comporte au moins un insert de renfort.

13. Double volant amortisseur (10) selon l'une quelconque des revendications précédentes, dans lequel les seconds moyens d'amortissement (28) comprennent deux rondelles de guidage (42, 44) comportant chacune au moins un renfoncement axial (49) formant un logement pour un groupe d'organes élastiques droits (46).

14. Double volant amortisseur (10) selon la revendication 12, comportant un moyeu de limitation (54), solidarisé en rotation avec les rondelles de guidage (42, 44), et comportant une denture externe (56) destinée à coopérer avec jeu avec une denture interne (58) du voile de liaison (36).

15. Double volant amortisseur (10) selon la revendication 13 ou 14, comportant des moyens (72) de limitation de couple, comportant une rondelle de limitation (74) solidaire en rotation avec le moyeu de limitation (54), et une rondelle élastique (76) de type Belleville intercalée entre la rondelle de limitation (74) et le volant secondaire (22), destinée à appliquer une charge sur le volant secondaire (22) de sorte que ce volant secondaire (22) soit pincé entre cette rondelle élastique (76) et l'une des rondelles de guidage (42, 44) des seconds moyens d'amortissement (28).

16. Double volant amortisseur (10) selon la revendication 15, dans lequel les moyens de limitation de couple (72) comprennent au moins une rondelle anti-usure (78, 79) intercalée entre le volant secondaire (22) et la rondelle élastique (76) et/ou entre le volant secondaire (22) et la rondelle de guidage (42, 44) des seconds moyens d'amortissement (28).


## Patentansprüche

1. Doppeldämpfungsschwungrad (10) für eine Kupplung, insbesondere von einem Kraftfahrzeug, umfassend ein primäres (12) und ein im Wesentlichen koaxiales sekundäres (14) Organ des Antriebsschwungrads, die im Verhältnis zueinander drehbeweglich und mittels ersten (26) und zweiten (28) unter Zwischenfügung eines Verbindungsflanschs (36) in Reihe angeordneten Dämpfungsmitteln miteinander gekoppelt sind, wobei:

   - die zweiten Dämpfungsmittel (28) zumindest zwei Gruppen (47) von elastischen Organen umfassen, die jede mindestens zwei gerade elastische Organe (46) umfasst, welche unter Zwischenfügung eines Auflagezwischenelements (52) in Reihe angeordnet sind, wobei sich jede Gruppe (47) von geraden elastischen Elementen in Umfangsrichtung zwischen zwei von dem Verbindungsflansch (36) getragenen zweiten Auflagesitzen (40B) erstreckt, wobei mindestens ein von dem Verbindungsflansch (36) verschiedenes ringförmiges Organ (50) zur Phaseneinteilung der geraden elastischen Organe (46) das Auflagezwischenelement (52) von jeder Gruppe trägt,

   dadurch gekennzeichnet, dass die ersten Dämpfungsmittel (26) zumindest ein gebogenes elastisches Organ (34) umfassen, das dazu bestimmt ist, sich in Umfangsrichtung zu verformen und das sich in Umfangsrichtung zwischen zwei von dem Verbindungsflansch (36) getragenen ersten Auflagesitzen (40A) erstreckt, und dadurch, dass die Differenz zwischen der maximalen Winkelauslenkung zwischen dem Primärorgan (12) und dem Verbindungsflansch (36) einerseits und der maximalen Winkelauslenkung zwischen dem Sekundärorgan (14) und dem Verbindungsflansch (36) andererseits kleiner als 30°, vorzugsweise kleiner als 10° ist.

2. Doppeldämpfungsschwungrad nach Anspruch 1, wobei die statischen Winkel-Steifigkeiten der ersten und zweiten Dämpfungsmittel (26, 28) im Wesentlichen identisch sind.

3. Doppeldämpfungsschwungrad (10) nach Anspruch 1 oder 2, wobei die maximale Winkelauslenkung zwischen dem Sekundärorgan (14) und dem Verbindungsflansch (36) größer ist als die maximale Winkelauslenkung zwischen dem Primärorgan (12) und dem Verbindungsflansch (36).

4. Doppeldämpfungsschwungrad (10) nach einem der vorherigen Ansprüche, wobei die zweiten Dämpfungsmittel (28) drei Gruppen (47) von elastischen Organen (46) umfassen, wobei jede Gruppe (47) zwei gerade elastische Organe (46) umfasst, die sich jeweils zwischen einem zweiten Auflagesitz (40B) und dem Auflagezwischenelement (52) von dieser Gruppe (47) erstrecken.

5. Doppeldämpfungsschwungrad (10) nach einem der vorherigen Ansprüche, wobei das Organ (50) zur Phaseneinteilung eine Scheibe mit einer um die Achse (X) des Primärorgans (12) und des Sekundärorgans (14) umlaufenden Gesamtform ist, wobei jedes Auflagezwischenelement (52) von einer auf dieser Scheibe (50) angeordneten radial äußeren Klaue gebildet ist.

6. Doppeldämpfungsschwungrad (10) nach einem der vorherigen Ansprüche, wobei jedes gebogene elastische Organ (34) der ersten Dämpfungsmittel (26) radial außerhalb von jedem geraden elastischen Organ (46) der zweiten Dämpfungsmittel (28) angeordnet ist.

7. Doppeldämpfungsschwungrad (10) nach einem der Ansprüche 1 bis 5, wobei jedes gebogene elastische Organ (34) der ersten Dämpfungsmittel (26) radial innerhalb von jedem geraden elastischen Organ (46) der zweiten Dämpfungsmittel (28) angeordnet ist.

8. Doppeldämpfungsschwungrad (10) nach einem der vorherigen Ansprüche, umfassend innere Dichtungsmittel (66), welche dritte (68) und vierte (70) Dichtungsscheiben aufweisen, wobei die dritte Dichtungsscheibe (68) zwischen der vierten Führungsscheibe (44) und dem Organ (50) zur Phaseneinteilung der zweiten Dämpfungsmittel (28) angeordnet ist, und die vierte Dichtungsscheibe (70) zwischen der dritten Führungsscheibe (42) der zweiten Dämpfungsmittel (28) und dem Flansch (36) angeordnet ist.

9. Doppeldämpfungsschwungrad (10) nach einem der vorherigen Ansprüche, umfassend äußere Dichtungsmittel (60), welche erste (62) und zweite (64) Dichtungsscheiben aufweisen, wobei die erste Dichtungsscheibe (62) zwischen der zweiten Führungsscheibe (32) der ersten Dämpfungsmittel (26) und der vierten Führungsscheibe (44) der zweiten Dämpfungsmittel (28) angeordnet ist, und die zweite Dichtungsscheibe (64) zwischen der ersten Führungsscheibe (30) der ersten Dämpfungsmittel (26) und der dritten Führungsscheibe (42) der zweiten Dämpfungsmittel (28) angeordnet ist.

10. Doppeldämpfungsschwungrad (10) nach einem der vorherigen Ansprüche, wobei der Verbindungsflansch (36) mindestens eine radiale Klaue (40) umfasst, die zugleich trägt:

    - zumindest den einen der ersten Sitze (40A), der dazu bestimmt ist, mit dem gebogenen elastischen Organ (34) der ersten Dämpfungsmittel (26) zusammen zu wirken, und
    - zumindest den einen der zweiten Sitze (40B), der dazu bestimmt ist, mit dem einen der geraden elastischen Organe (46) der zweiten Dämpfungsmittel (28) zusammen zu wirken.

11. Doppeldämpfungsschwungrad (10) nach einem der vorherigen Ansprüche, wobei das Organ (50) zur Phaseneinteilung aus einem Material besteht, dessen Dichte kleiner als 5000 kg/m$^3$ ist, vorzugsweise aus einem Material gewählt aus Aluminium, Titan oder einem Verbundmaterial auf Basis von Glasfasern, Karbonfasern oder Kevlarfasern.

12. Doppeldämpfungsschwungrad (10) nach einem der vorherigen Ansprüche, wobei das Organ (50) zur Phaseneinteilung zumindest einen Verstärkungseinsatz umfasst.

13. Doppeldämpfungsschwungrad (10) nach einem der vorherigen Ansprüche, wobei die zweiten Dämpfungsmittel (28) zwei Führungsscheiben (42, 44) umfassen, welche jeweils zumindest eine axiale Vertiefung (49) aufweisen, die eine Aufnahme für eine Gruppe von geraden elastischen Organen (46) bildet.

14. Doppeldämpfungsschwungrad (10) nach Anspruch 12, umfassend eine Begrenzungsnabe (54), die drehfest mit den Führungsscheiben (42, 44) ist und eine äußere Zahnung (56) aufweist, die dazu bestimmt ist, mit Spiel mit einer inneren Zahnung (58) des Verbindungsflanschs (36) zusammen zu wirken.

15. Doppeldämpfungsschwungrad (10) nach Anspruch 13 oder 14, umfassend Drehmomentbegrenzungsmittel (72), die eine mit der Begrenzungsnabe (54) drehfeste Begrenzungsscheibe (74) und eine zwischen die Begrenzungsscheibe (74) und das Sekundärschwungrad (22) zwischengeschaltete elastische tellerfederartige Scheibe (76) umfassen, welche dazu bestimmt ist, eine Belastung auf das Sekundärschwungrad (22) aufzulegen, so dass das Sekundärschwungrad (22) zwischen dieser elastischen Scheibe (76) und der einen der Führungsscheiben (42, 44) der zweiten Dämpfungsmittel (28) eingeklemmt ist.

16. Doppeldämpfungsschwungrad (10) nach Anspruch 15, wobei die Drehmomentbegrenzungsmittel (72) zumindest eine Anti-Verschleiß Scheibe (78, 79) umfassen, die zwischen das Sekundärschwungrad (22) und die elastische Scheibe (76) und/oder zwischen das Sekundärschwungrad (22) und die Führungsscheibe (42, 44) der zweiten Dämpfungsmittel (28) zwischengeschaltet ist.

**Claims**

1. Double damping flywheel (10) for a clutch, in particular for a motor vehicle, comprising primary (12) and secondary (14) engine flywheel units, which are substantially coaxial, mobile in rotation relative to one another, and coupled by means of first (26) and second (28) damping means which are arranged in series by means of a connection flange (36), such that:

   - the first damping means (26) comprise at least one curved resilient unit (34) which is designed to be deformed circumferentially, and extends circumferentially between two first support seats (40A) supported by the connection flange (36), and in that
   - the second damping means (28) comprise at least two groups of resilient units (47), each comprising at least two straight resilient units (46) which are arranged in series by means of an intermediate support element (52), each group of straight resilient units (47) extending circumferentially between two second support seats (40B) which are supported by the connection flange (36),
   - at least one annular unit (50) for phasing of the straight resilient units (46), distinct from the connection flange (36), supporting the intermediate support element (52) of each unit,

   **characterised in that** the first damping means (26) comprise at least one curved resilient unit (34) which is designed to be deformed circumferentially, and extends circumferentially between two first support seats (40A) supported by the connection flange (36), and **in that** the difference between the maximum angular clearance between the primary unit (12) and the connection flange (36), and the maximum angular clearance between the secondary unit (14) and the connection flange (36) is less than 30°, and preferably less than 10°.

2. Double damping flywheel according to claim 1, wherein the static angular rigidities of the first and second damping means (26, 28) are substantially identical.

3. Double damping flywheel (10) according to claim 1 or 2, wherein the maximum angular clearance between the secondary unit (14) and the connection flange (36) is greater than the maximum angular clearance between the primary unit (12) and the connection flange (36).

4. Double damping flywheel (10) according to any one of the preceding claims, wherein the second damping means (28) comprise three groups (47) of resilient units (46), each group (47) comprising two straight resilient units (46) which each extend between a respective second support seat (40B) and the intermediate support element (52) of this group (47).

5. Double damping flywheel (10) according to any one of the preceding claims, wherein the phasing unit (50) is a washer with a form generally of revolution around the axis (X) of the primary (12) and secondary (14) units, each intermediate support element (52) being formed by an outer lug arranged radially on this washer (50).

6. Double damping flywheel (10) according to any one of the preceding claims, wherein each curved resilient unit (34) of the first damping means (26) is arranged radially on the exterior relative to each straight resilient unit (46) of the second damping means (28).

7. Double damping flywheel (10) according to one of claims 1 to 5, wherein each curved resilient unit (34) of the first damping means (26) is arranged radially on the interior relative to each straight resilient unit (46) of the second damping means (28).

8. Double damping flywheel (10) according to any one of the preceding claims, comprising inner sealing means (66) comprising third (68) and fourth (70) sealing washers, the third sealing washer (68) being arranged between the fourth guide washer (44) and the phasing unit (50) of the second damping means (28), and the fourth sealing washer (70) being arranged between the third guide washer (42) of the second damping means (28) and the flange (36).

9. Double damping flywheel (10) according to any one of the preceding claims, comprising outer sealing means (60) comprising first (62) and second (64) sealing washers, the first sealing washer (62) being arranged between the second guide washer (32) of the first damping means (26) and the fourth guide washer (44) of the second damping means (28), and the second sealing washer (64) being arranged between the first guide washer (30) of the first damping means (26) and the third guide washer (42) of the second damping means (28).

10. Double damping flywheel (10) according to any one of the preceding claims, wherein the connection flange (36) comprises at least one radial lug (40) which supports at the same time:

    - at least one of the first seats (40A) which is designed to co-operate with the curved resilient unit (34) of the first damping means (26); and
    - at least one of the second seats (40B) which is designed to co-operate with one of the straight resilient units (46) of the second damping means (28).

11. Double damping flywheel (10) according to any one of the preceding claims, wherein the phasing unit (50) is made of material with a density of less than 5000 kg/m$^3$, and preferably a material selected from amongst aluminium, titanium, or a compound based on glass fibres, carbon fibres, or Kevlar fibres.

12. Double damping flywheel (10) according to any one of the preceding claims, wherein the phasing unit (50) comprises at least one reinforcement insert.

13. Double damping flywheel (10) according to any one of the preceding claims, wherein the second damping means (28) comprise two guide washers (42, 44), each comprising at least one axial reinforcement (49) which forms a receptacle for a group of straight resilient units (46).

14. Double damping flywheel (10) according to claim 12, comprising a limitation hub (54) which is rendered integral in rotation with the guide washers (42, 44), and comprises outer toothing (56) which is designed to co-operate with play with inner toothing (58) of the connection flange (36).

15. Double damping flywheel (10) according to claim 13 or 14, comprising torque limitation means (72), comprising a limitation washer (74) which is integral in rotation with the limitation hub (54), and a resilient washer (76) of the Belleville type, which is interposed between the limitation washer (74) and the secondary flywheel (22), and is designed to apply a load to the secondary flywheel (22), such that this secondary flywheel (22) is gripped between this resilient washer (76) and one of the guide washers (42, 44) of the second damping means (28).

16. Double damping flywheel (10) according to claim 15, wherein the torque limitation means (72) comprise at least one anti-wear washer (78, 79) which is interposed between the secondary flywheel (22) and the resilient washer (76) and/or between the secondary flywheel (22) and the guide washer (42, 44) of the second damping means (28).

Fig. 1

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776733 A

- FR 2647171 A